# NEUE EUROPÄISCHE PATENTSCHRIFT

(11) **EP 1 365 883 B2**
(45) Veröffentlichungstag und Bekanntmachung des Hinweises auf die Entscheidung über den Einspruch: **27.06.2007**
(45) Hinweis auf die Patenterteilung: 24.11.2004
(21) Anmeldenummer: 02729967.6
(22) Anmeldetag: 06.03.2002
(51) Int. Cl.: B23K 35/38, B23K 26/12

(54) **LASERSCHWEI EN VON NICHTEISENMETALLEN MITTELS LASERDIODEN UNTER PROZESSGAS**
LASER WELDING OF NONFERROUS METALS BY USING LASER DIODES AND PROCESS GAS
SOUDAGE AU LASER DE METAUX NON FERREUX AU MOYEN DE DIODES LASER EN PRESENCE D'UN GAZ DE TRAITEMENT

(30) Priorität: 06.03.2001 DE 10110702; 06.03.2001 DE 10110701
(43) Veröffentlichungstag der Anmeldung: 03.12.2003
(73) Patentinhaber: Linde Aktiengesellschaft, 65189 Wiesbaden (DE)
(72) Erfinder: DANZER, Wolfgang, 84405 Dorfen (DE)
(74) Vertreter: Gellner, Bernd
(86) Internationale Anmeldenummer: PCT/EP2002/002474
(87) Internationale Veröffentlichungsnummer: WO 2002/070192

(56) Entgegenhaltungen:
- DE-A- 4 234 342
- DE-A- 19 901 898
- DE-A- 19 901 900
- FR-A- 2 798 085
- JP-A- 10 296 472
- JP-A- 62 254 992
- US-A- 4 808 789
- US-A- 5 831 239
- "Overview Benefits of Direct Diode Lasers for Welding", Nuvonyx Inc,S. 1-4 2000
- JP-A-10296472 mit Ubersetzung in English
- JP-A-62-254992 mit Ubersetzung in English
- "Materials Processing-the diode laser alternative," TWI Bulletin
- Schweisstechnische Fertigugsverfahren Band 1, U. Dilthey, VDI Verlag, Düsseldorf 1994, S. 158-179

## Beschreibung

Die Erfindung betrifft ein Prozessgas zur Verwendung beim Laserschweißen von nichteisenmetallischen Werkstücken mit einem auf das zu schweißende Werkstück fokussierten, wobei als Laserstrahlenquelle eine Laserdiode eingesetzt wird.

Die Erfindung betrifft ferner ein Verfahren zum Laserschweißen von Nichteisenmetallen, wobei als Laserstrahlenquelle eine Laserdiode oder mehrere Laserdioden eingesetzt werden, wobei zumindest ein fokussierter Laserstrahl an der Bearbeitungsstelle auf eine zu bearbeitende Werkstückoberfläche geführt wird und wobei ein Prozessgasstrom gegen die Werkstückoberfläche geleitet wird.

Die Eigenschaften der Laserstrahlung, insbesondere die Intensität und gute Fokussierbarkeit, haben dazu geführt, dass Laser heute in vielen Gebieten der Materialbearbeitung zum Einsatz kommen. Oftmals werden dabei Laserbearbeitungsanlagen in Verbindung mit CNC-Steuerungen eingesetzt. Entsprechende Laserbearbeitungsanlagen sind in zahlreichen Variationen bekannt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase eingesetzt, um diese Materialbearbeitungsprozesse effektiver, schneller und/oder mit verbesserter Qualität durchführen zu können.

Beim Laserschweißen ist es bekannt, inerte Schutzgase wie Helium oder Argon einzusetzen. Auch Stickstoff wird teilweise verwendet Vereinzelt werden auch Beimengungen von Aktivgasanteilen wie Kohlendioxid, Sauerstoff oder Wasserstoff zu Argon oder Stickstoff gemischt.

Die Aufgaben der Prozessgase beim Laserschweißen sind sehr vielfältig. Die Prozessgase bestimmen unter anderem im großen Maße die Wirtschaftlichkeit, Qualität und Prozesssicherheit der Laserschweißung.

Diodenlaser als Laserstrahlquelle gegenüber Festkörperlasern (z.B. Nd:YAG-Laser) und Gaslasern (z.B. CO₂-Laser) sind beim Laserschweißen auf Grund einer Reihe von Vorteilen interessant: Diodenlaser stellen eine außerordentlich effiziente künstliche Lichtquelle dar. Sie lassen sich ohne großen Aufwand installieren und kommen in der Regel mit einer herkömmlichen Stromzufuhr als Energieversorgung aus. Sie sind klein und sehr kompakt. Ferner bieten sie einen hohen Wirkungsgrad (mit 40 bis 50 % etwa fünfmal höher als bei einem konventionellen Lasersystem). Sie weisen schließlich eine hohe Lebensdauer (üblicherweise mindestens 10.000 Stunden) auf.

In der Praxis konnten sich Diodenlaser beim Laserschweißen von Nichteisenmetallen bislang nicht durchsetzen. Es traten ungenügende Laserschweißungen, insbesondere mit geringen Schweißtiefen, auf.

Aus den eigenen Patentveröffentlichung DE 199 01 900 A1 und DE 199 01 898 A1 ist es bekannt, Prozessgase beim Laserschweißen niedriglegierter Stähle und verzinkter Stähle einzusetzen, welche entweder neben Helium und gegebenenfalls Argon zumindest Kohlendioxid mit einem Anteil bis zu 40 Vol.-% oder neben Helium und gegebenenfalls Argon zumindest Sauerstoff mit einem Anteil bis zu 30 Vol.-% enthalten enthält. Das Laserschweißen von Nichteisenmetallen wird in keiner der Patentveröffentlichungen näher betrachtet.

Gerade beim Laserschweißen von Nichteisenmetallen treten häufig aufgrund von Reflexionen der Strahlung an der Werkstückoberfläche nur geringe Energieeinkopplungen auf, die in der Regel einen qualitativ hochwertigen Laserschweißprozess unter Einsatz von Laserdioden als Laserstrahlquelle nicht zulassen.

Der Erfindung lag daher die Aufgabe zugrunde, ein Prozessgas und ein Verfahren der eingangs genannten Art aufzuzeigen, welche ein verbessertes Laserschweißen von Nichteisenmetallen mittels Laserdioden ermöglichen. Es sollte ein qualitativ hochwertiger Laserschweißprozess zur Verfügung gestellt werden. Insbesondere sollten mit Hilfe des Prozessgases auch neben der Kontrolle und Reduzierung des Plasmas eine Laserschweißung bei hoher Schweißgeschwindigkeit, tiefem Einbrand, hoher Qualität und guten Nahtgeometrien erreicht werden können.

Diese Aufgabe wird erfindungsgemäß dadurch gelöst, dass ein Prozessgas, das aus 100 Vol.-% Kohlendioxid oder aus einem
- binären Gasgemisch mit den Komponenten Kohlendioxid und Argon,
- binären Gasgemisch mit den Komponenten Kohlendioxid und Stickstoff,
   oder
- ternären Gasgemisch mit den Komponenten Kohlendioxid, Argon und Stickstoff
besteht, verwendet wird.

Unter Nichteisenmetallen sind im Rahmen der Erfindung im Gegensatz zu Eisenwerk-Stoffen und Stählen insbesondere Aluminiumwerkstoffe und -legierungen, Magnesiumwerkstoffe und -legierungen, Nickelbasiswerkstoffe und -legierungen, Kupferwerkstoffe und -legierungen und/oder Messing-haltige Werkstoffe zu verstehen.

Entscheidend für die Erfindung ist die überraschende Tatsache, dass Kohlendioxid als den Schweißprozess beeinflussende Parameter wirkt und ein qualitativ hochwertiges Laserschweißen mit hoher Schweißgeschwindigkeit ergibt.

Zu beobachten ist, dass, wenn das Prozessgas Sauerstoff enthält, wie in der Druckschrift JP 62254992 für das Schweißen mit CO₂-Lasern offenbart ist, der Sauerstoff eine Veränderung des Schmelzbades bewirkt. An Stelle des ansonsten beobachteten Drehen des Schmelzbades nach oben (von der bearbeiteten Werkstückoberfläche weg) tritt ein unerwartetes Drehen des Schmelzbades nach unten, d.h. in Richtung der zu bearbeitenden Werkstückoberfläche hin, auf. Vermutlich wird aufgrund des Sauerstoffs aus dem Prozessgas im Schweißbad die Oberflächenspannung reduziert, was zum Resultat eines qualitativ hochwertigen Laserschweißprozesses mit tiefem Einbrand führt.

Kohlendioxid im Prozessgas führt zu einer außerordentlich guten Energieeinkopplung. Dies zeigt die Tatsache, dass mit Kohlendioxid im Prozessgas überraschenderweise Laserschweißprozesse ohne lokale Überhitzung des Werkstücks möglich sind. Möglicherweise basiert dies auf dem Dipolcharakter des Kohlendioxid-Moleküls im Prozessgas. Vermutlich werden aufgrund des Kohlendioxids aus dem Prozessgas im Werkstück Schwingungen erzeugt, die zum gewünschten Resultat eines qualitativ hochwertigen Laserschweißprozesses führen. Ob hier eine Umwandlung der Strahlungsenergie in Rotations- und/oder Schwingungsenergie letztendlich für die Verbesserung verantwortlich ist, konnte derzeit noch nicht abschließend geklärt werden.

Ein Prozessgas, welches Kohlendioxid enthält, wird die Wirkungen zeigen und ebenso hohe Schweißgeschwindigkeiten bei qualitativ hochwertigen Schweißungen ermöglichen.

Die Angaben zu den Volumenanteilen beziehen sich auf gewollte Bestandteile des Prozessgases und nicht auf ungewollte bzw. herstellungsbedingte Verunreinigungen. Das Kohlendioxid kann daher auch bei einem Anteil 100 Vol.-% übliche Verunreinigungen enthalten. Vorteilhafterweise liegt der Anteil von Kohlendioxid im Prozessgas bei 15 und 90 Vol.-%, vorzugsweise zwischen 45 und 85 Vol.-%, besonders bevorzugt zwischen 55 und 80 Vol-%.

In Weiterbildung der Erfindung wird das Prozessgas in Richtung der Normalen (unter einem Winkel von 90 °) der Werkstückoberfläche zugeführt.

In Ausbildung der Erfindung - insbesondere auch für die genannten binären bzw. ternären Gasgemische - eignen sich für das Laserschweißen Laserdioden mit einer Wellenlänge von 700 bis 1300 nm, bevorzugt von 800 bis 1000 nm. Es werden damit für die Erfindung Hochleistungs-Laserdioden im Infrarotbereich bevorzugt.

Im Rahmen der Erfindung können insbesondere Hochleistungs-Laserdioden mit einer Laserleistung von 0,5 bis zu 6 kW, bevorzugt zwischen 1 und 4 kW, eingesetzt werden.

In Versuchen hat sich beispielsweise beim Laserschweißen eines Werkstückes aus AlMgSi1 mit einer Stärke von 2 mm mittels einer Laserdiode mit 3 KW Laserleistung die Wirkung des Sauerstoffs im Prozessgas bestätigt. Dabei wurde unter einem konzentrisch zum Laserstrahl unter 90 ° auf die Werkstückoberfläche zugeführten Prozessgas bei einer Schweißgeschwindigkeit von 1 m/min geschweißt. Dabei wurde einerseits als Vergleichsversuch gemäß dem Stand der Technik als Prozessgas Argon zugeführt und unter ansonsten identischen Bedingungen ein Prozessgas aus Sauerstoff verwendet. Im Vergleich zur Schweißung unter Argon traten die Vorteile von Sauerstoff deutlich zum Vorschein. So belegt eine Auswertung von Schliffen, dass die im so erhaltenen Schnitt vorliegende geschweißte Fläche im Falle der Laserschweißung mit Argon einen Wert von 0,93 mm² aufweist, während sich im Schnitt für die Laserschweißung mit Sauerstoff eine Fläche von 7,76 mm² ergab. Die Wirkung beim Laserschweißen konnte folglich allein mit der Änderung des Prozessgases von Argon auf Sauerstoff auf über das Achtfache gesteigert werden.

Die Erfindung sowie weitere Einzelheiten der Erfindung werden im Folgenden anhand von in den Figuren dargestellten Versuchsergebnissen näher erläutert. Hierbei zeigen:
Figur 1: ein Schliff eines Werkstückes nach Laserschweißung mit Argon,
Figur 2: ein Schliff eines Werkstückes nach erfindungsgemäßer Laserschweißung mit Kohlendioxid.

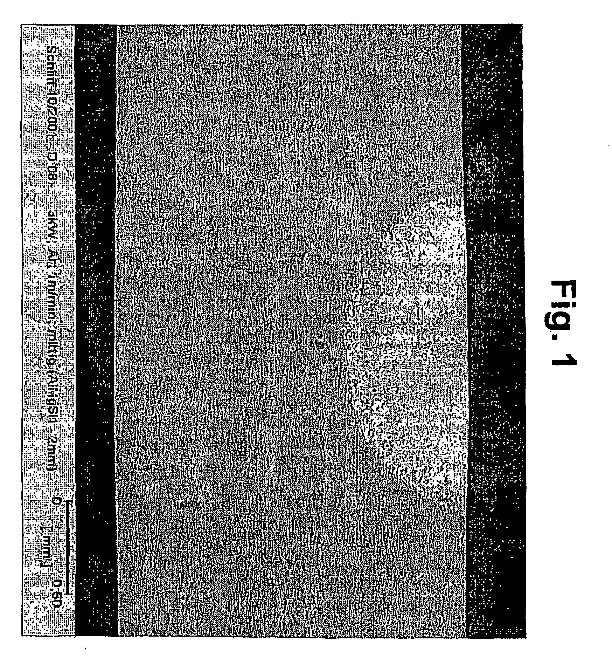

Im Schliff aus **Figur 1** ist ein Werkstück aus AlMgSi1 mit einer Stärke von 2 mm dargestellt, welches mittels einer Laserdiode mit 3 KW Laserleistung gemäß dem Stand der Technik unter einem konzentrisch zum Laserstrahl unter 90 ° auf die Werkstückoberfläche zugeführten Prozessgas aus Argon bei einer Schweißgeschwindigkeit von 1 m/min geschweißt wurde.

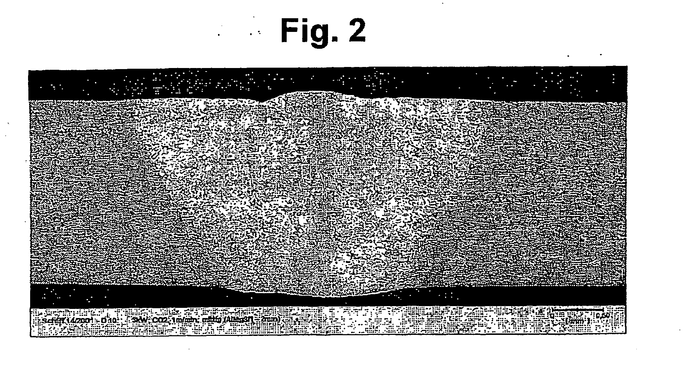

Der Schliff aus **Figur 2** zeigt im Vergleich dazu ein gleiches Werkstück aus AlMgSi1 mit einer Stärke von 2 mm, welches erfindungsgemäß ebenfalls mittels einer Laserdiode mit 3 KW Laserleistung unter einem konzentrisch zum Laserstrahl unter 90 ° auf die Werkstückoberfläche zugeführten Prozessgases aus Kohlendioxid bei einer Schweißgeschwindigkeit von 1 m/min geschweißt wurde.

Im Vergleich zur Schweißung nach Figur 1 unter Argon treten die Vorteile der Erfindung in Figur 2 deutlich zum Vorschein, nämlich dass die Energieeinkopplung in das zu schweißende Werkstück mit dem Prozessgas aus Kohlendioxid bei sonst gleichen Bedingungen wesentlich erhöht werden konnte. So weist die im Schnitt vorliegende geschweißte Fläche im Falle der Figur 1 eine Wert von 0,93 mm² auf, während sich im Schnitt nach Figur 2 eine Fläche von 5,75 mm² ergibt. Die Wirkung beim Laserschweißen konnte folglich allein mit der Änderung des Prozessgases von Argon auf Kohlendioxid auf etwa das Sechsfache gesteigert werden.

## Patentansprüche

1. Verwendung eines Prozessgases zum Laserschweißen von nichteisenmetallischen Werkstücken mit einem auf das zu schweißende Werkstück fokussierten Laserstrahl, wobei als Laserstrahlenquelle eine Laserdiode eingesetzt wird, **dadurch gekennzeichnet, dass** das Prozessgas aus 100 Vol.-% Kohlendioxid oder aus einem
• binären Gasgemisch mit den Komponenten Kohlendioxid und Argon,
• binären Gasgemisch mit den Komponenten Kohlendioxid und Stickstoff,
oder
• ternären Gasgemisch mit den Komponenten Kohlendioxid, Argon und Stickstoff
besteht.

2. Verwendung eines Prozessgases nach Anspruch 1, **dadurch gekennzeichnet, dass** das Prozessgas zwischen 15 und 90 Vol.-% Kohlendioxid, vorzugsweise zwischen 45 und 85 Vol.-% Kohlendioxid, besonders bevorzugt zwischen 55 und 80 Vol.-% Kohlendioxid enthält.

3. Verwendung eines Prozessgases nach einem der Ansprüche 1 oder 2, **dadurch gekennzeichnet, dass** das Prozessgas in Richtung der Normalen (unter einem Winkel von 90 °) der Werkstückoberfläche zugeführt wird.

## Claims

1. Use of a process gas for the laser welding of nonferrous metallic workpieces using a laser beam focussed onto the workpiece which is to be welded, with a laser diode being used as the laser beam source, **characterized in that** the process gas consists of 100% by volume of carbon dioxide or of a
■ binary gas mixture comprising the components carbon dioxide and argon,
■ binary gas mixture comprising the components carbon dioxide and nitrogen, or
■ ternary gas mixture comprising the components carbon dioxide, argon and nitrogen.

2. Use of a process gas according to Claim 1, **characterized in that** the process gas contains between 15 and 90% by volume of carbon dioxide, preferably between 45 and 85% by volume of carbon dioxide, particularly preferably between 55 and 80% by volume of carbon dioxide.

3. Use of a process gas according to either of Claims 1 and 2, **characterized in that** the process gas is supplied in the direction of the normal (at an angle of 90°) to the workpiece surface.

## Revendications

1. Utilisation d'un gaz de procédé en vue de la soudure au laser de pièces métalliques non ferreuses à l'aide d'un rayon laser focalisé sur la pièce à souder, étant donné que l'on utilise, en tant que source de rayons laser, un diode laser, **caractérisée en ce que** le gaz de procédé se compose de 100% en volume de dioxyde de carbone ou
• d'un mélange gazeux binaire avec les composants dioxyde de carbone et argon,
• d'un mélange gazeux binaire avec les composants dioxyde de carbone et azote ou
• d'un mélange gazeux ternaire avec les composants dioxyde de carbone, argon et azote.

2. Utilisation d'un gaz de procédé selon la revendication 1, **caractérisée en ce que** le gaz de procédé contient entre 15 et 90 % en volume de dioxyde de carbone, de préférence, entre 45 et 85% en volume de dioxyde de carbone, en particulier, de préférence, entre 55 et 80% en volume de dioxyde de carbone.

3. Utilisation d'un gaz de procédé selon la revendication 1 ou 2, **caractérisée en ce que** le gaz de procédé est acheminé dans la direction de la normale (sous un angle de 90°) à la surface de la pièce.
